# EUROPÄISCHE PATENTSCHRIFT

(11) **EP 2 805 137 B1**
(45) Veröffentlichungstag und Bekanntmachung des Hinweises auf die Patenterteilung: **04.01.2017**
(21) Anmeldenummer: 13718080.8
(22) Anmeldetag: 17.01.2013
(51) Int. Cl.: G01G 21/28

(54) **STABWÄGEZELLE ZUR BEFESTIGUNG IN DÜNNWANDIGEN HOHLPROFILEN**
BEAM-TYPE LOAD CELL FOR FASTENING IN THIN-WALLED HOLLOW PROFILES
CELLULE DE PESAGE EN FORME DE TIGE DESTINÉE À ÊTRE FIXÉE DANS DES PROFILÉS CREUX À PAROIS MINCES

(30) Priorität: 17.01.2012 DE 102012000803; 17.01.2012 DE 102012000801
(43) Veröffentlichungstag der Anmeldung: 26.11.2014
(73) Patentinhaber: Hottinger Baldwin Messtechnik GmbH, 64293 Darmstadt (DE)
(72) Erfinder: SCHLACHTER, Werner, 64380 Rossdorf (DE)
(74) Vertreter: Staudte, Ralph
(86) Internationale Anmeldenummer: PCT/DE2013/000033
(87) Internationale Veröffentlichungsnummer: WO 2013/107442

(56) Entgegenhaltungen:
- EP-A2- 0 447 782
- US-A- 3 773 123

## Beschreibung

Die Erfindung betrifft eine stabförmige Wägezelle mit einer Befestigungsvorrichtung zur Befestigung in einem dünnwandigen Hohlprofil, welches unterschiedliche Querschnittsformen aufweisen kann.

Stabförmige Wägezellen sind vorzugsweise mit einem als Doppelbiegefeder ausgebildeten Dehnungsabschnitt versehen und aus dem Stand der Technik bekannt. Eine Wägezelle dieses Typs wird an ihrem Befestigungsabschnitt an einer Basis befestigt und an ihrem Belastungsabschnitt mit einer Kraft F belastet. Mittels Dehnungsmessstreifen, die auf der Doppelbiegefeder angeordnet sind, werden Dehnungen an dieser gemessen und in eine Kraft umgerechnet.

So ist beispielsweise in dem Dokument EP 0 447 782 A2 ein Biegekraftaufnehmer in Form eines Biegebalkens beschrieben. Der Biegekraftaufnehmer umfasst einen Krafteinleitungsteil, einen Befestigungsteil und zwischen diesen beiden Teilen angeordnete Dehnungsmessstreifen. In dem Dokument US 3 773 123 A ist darüber hinaus ein Mechanismus beschrieben, bei dem mittels keilförmigen Elementen, die in Kontakt mit einem Wägesystem gebracht werden können, ein Blockieren des Wägesystems erreicht werden kann.

Die Befestigung der Wägezelle an oder in der Basis erfolgt vorzugsweise durch eine Verschraubung. Dazu weist der Befestigungsabschnitt der Wägezelle üblicherweise Löcher und die Basis, an welcher die Wägezelle befestigt wird, dazu korrespondierende Gewindebohrungen auf. Die Befestigung durch Verschrauben ist zuverlässig und für viele Anwendungsfälle geeignet.

Es gibt jedoch Anwendungsfälle, bei denen die Befestigung der Wägezelle durch Verschraubung zusätzliche Maßnahmen erfordert. Das ist z. B. dann erforderlich, wenn die Wägezelle an einer dünnwandigen Basis befestigt werden muss. Beim Angriff einer Kraft kann sich die dünnwandige Basis verbiegen. Daher ist es erforderlich, die Basis an der Befestigungsstelle zu verstärken. Vergleichbare Bedingungen liegen vor, wenn die Wägezelle in einem dünnwandigen Hohlprofil befestigt werden soll.

Es ist daher die Aufgabe der Erfindung, eine Konstruktion zu schaffen, mit deren Hilfe eine Stabwägezelle in einem dünnwandigen Hohlprofil besser befestigt und mit geringem Aufwand ausgetauscht werden kann.

Diese Aufgabe wird mit einer Stabwägezelle nach Anspruch 1 gelöst. Die Erfindung betrifft eine Stabwägezelle mit einem Belastungsabschnitt zur Aufnahme einer Kraft, einem Befestigungsabschnitt zum Befestigen der Stabwägezelle in einem Hohlprofil, wenigstens einem Dehnungssensor, der zwischen dem Belastungsabschnitt und dem Befestigungsabschnitt angeordnet ist, wobei der Befestigungsabschnitt wenigstens ein bewegbares Befestigungselement mit einer mit der Innenwand des Hohlprofils in Presskontakt bringbaren Klemmfläche aufweist, zwischen dem Belastungsabschnitt und dem Befestigungsabschnitt eine Bewegungsvorrichtung zum Pressen des Befestigungselements an die Innenwand der Hohlprofils angeordnet ist, die Klemmfläche an die Geometrie der Innenwand des Hohlprofils angepasst ist, und die Größe der Klemmfläche wenigstens 40 % der Fläche beträgt, die sich als Produkt aus dem Innenumfang des Hohlprofils an der Klemmstelle und der Länge des Befestigungselements ergibt.

Der Vorteil einer möglichst großen Klemmfläche von wenigstens 40% besteht nicht nur in einer einfachen und sicheren Befestigung der Stabwägezelle, sondern auch in der Erhöhung der Biegesteifigkeit des Hohlprofils an der Klemmstelle. Diese partielle Stabilitätserhöhung ist ein wesentlicher positiver Effekt, besonders dann, wenn in eine Hohlprofil-Rahmenkonstruktion mehrere Stabwägezellen eingebaut werden müssen. Anstelle sonst erforderlicher zusätzlicher Stabilitätselemente in Form von Verstärkungsmanschetten erfolgt die Stabilitätserhöhung der Profilkonstruktion auf Grund des Einbaus dieser Stabwägezellen. Weiterhin bewirken die an der Klemmstelle auftretenden Zugspannungen im Material des Hohlprofils eine weitere Erhöhung der Knickfestigkeit.

Da das Hohlprofil nicht durch Befestigungslöcher geschwächt ist, wird ebenfalls eine höhere Stabilität an der Klemmstelle erreicht. In speziellen Fällen ist es auch vorteilhaft, wenn das Design der Außenfläche des Hohlprofils nicht durch sichtbare Schraubenköpfe negativ beeinflusst wird.

Es ist es möglich, Hohlprofile mit rundem, rechteckigem, trapezförmigem oder elliptischem Querschnitt zu verwenden.

Nach Anspruch 2 beträgt die Klemmfläche wenigstens 60 % der Fläche, die sich als Produkt aus dem Innenumfang des Hohlprofils an der Klemmstelle und der Länge des Befestigungselements ergibt, wodurch die Belastbarkeit des dünnwandigen Hohlprofils an der Klemmstelle noch weiter erhöht wird.

Nach Anspruch 3 weist der Befestigungsabschnitt der Stabwägezelle nachfolgende Merkmale auf: Anlaufschrägen, spreizbackenförmige Befestigungselemente, die auf den Anlaufschrägen sitzen, und eine Brücke, wobei die spreizbackenförmigen Befestigungselemente über die Brücke miteinander verbunden sind. Als Bewegungsvorrichtung ist eine Gewindespindel mit einem Mitnehmerkopf vorgesehen, die innerhalb der Stabwägezelle drehbar angeordnet ist, sodass beim Drehen der Gewindespindel die Befestigungselemente mittels des Mitnehmerkopfes auf die Anlaufschrägen gezogen und gegen die Innenwand des Hohlprofils gedrückt werden. Je nach der Querschnittform des Hohlprofils können mehrere Anlaufschrägen und mehrere Befestigungselemente vorgesehen werden.

Nach Anspruch 4 ist in der Stabwägezelle eine axiale Bohrung eingebracht, so dass die Gewindespindel vom Belastungsabschnitt her mit einem stabförmigen Werkzeug erreichbar ist. Diese Ausführungsform der Erfindung kann verwendet werden, wenn das Hohlprofil nur einseitig offen oder gekrümmt ist, sodass die Gewindespindel nur von einer Seite erreichbar ist.

Nach Anspruch 5 sind die Spreizbacken und die Brücke einstückig ausgebildet, was deren Montierbarkeit verbessert.

Die Erfindung wird nachfolgend an Hand von Ausführungsbeispielen in Verbindung mit schematischen Zeichnungen und im Vergleich zum Stand der Technik näher erläutert.
- Fig. 1a bis 1c: zeigen eine an eine dünne Platte montierte stabförmige Wägezelle.
- Fig. 2a bis 2g: zeigen eine in einem dünnwandigen Holprofil montierte stabförmige Wägezelle.
- Fig. 3a: zeigt eine erste Ausführungsform der Erfindung in perspektivischer Darstellung.
- Fig. 3b: zeigt einen Längsschnitt der ersten Ausführungsform der Erfindung und eine Detailvergrößerung.
- Fig. 3c: zeigt die Schnittansicht der ersten Ausführungsform an der in Fig. 3b angedeuteten Schnittlinie A-A.
- Fig. 4: zeigt die Schnittansicht A-A wie in Fig. 3c, jedoch bei Verwendung eines Hohlprofils mit kreisförmigem Querschnitt und von Befestigungselementen mit dazu passendem Profil.
- Fig. 5a, 5b: zeigen Schnittansichten A-A wie in Figur 3c, jedoch bei Verwendung von Hohlprofilen mit trapezförmigem Querschnitt und Befestigungselementen mit jeweils dazu passendem Außenprofil.

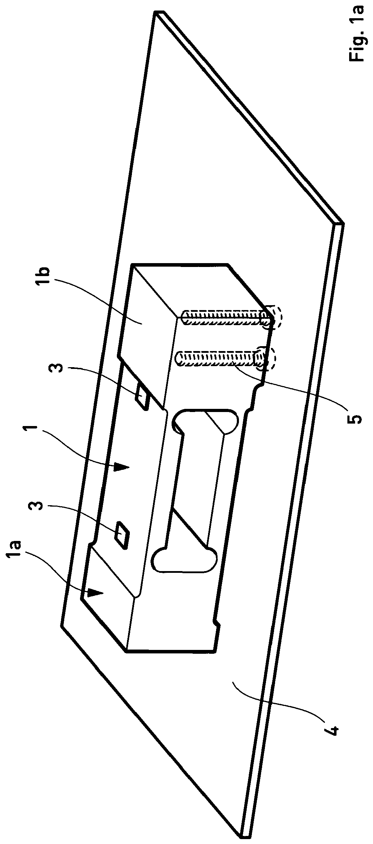

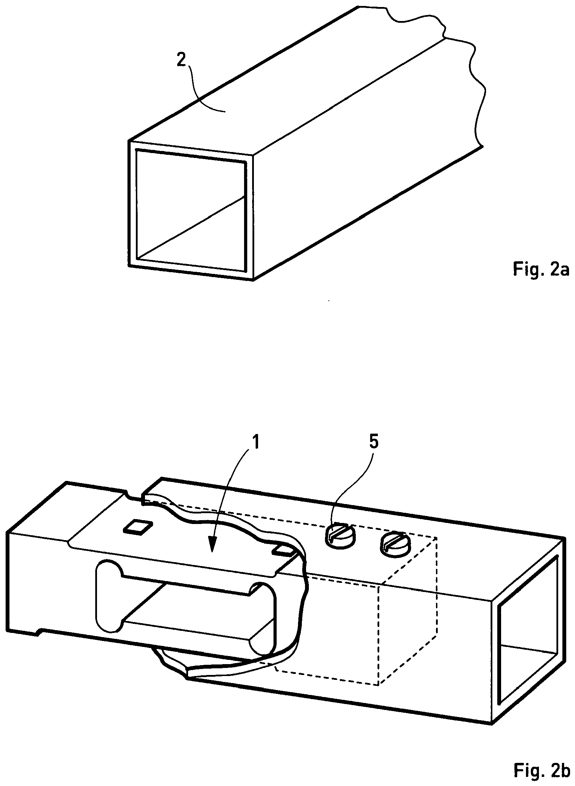

Die mit der erfindungsgemäßen Stabwägezelle lösbare Aufgabe wird anhand der den Stand der Technik bildenden Fig. 1a bis 1c und Fig. 2a bis 2g näher erläutert.

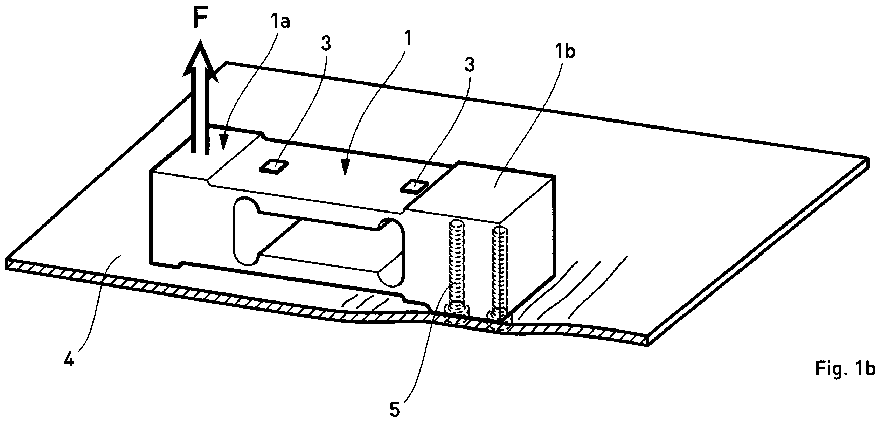

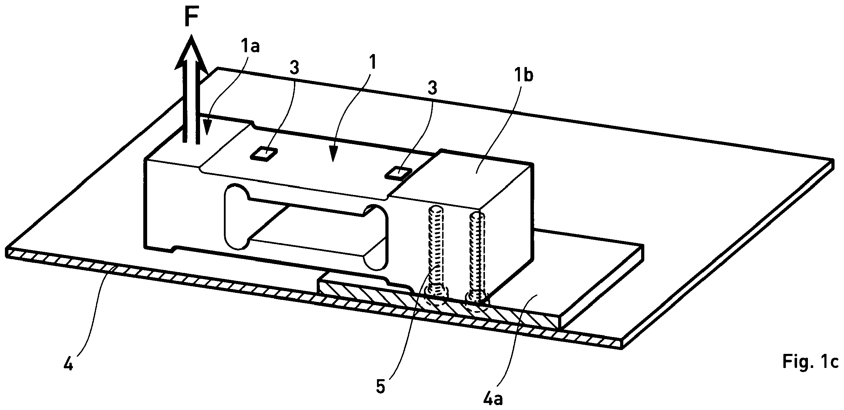

Die Fig. 1a zeigt eine stabförmige Wägezelle 1 und deren Befestigung an einer dünnen Platte 4. Der Befestigungsabschnitt 1 b der Wägezelle 1 weist zwei Gewindebohrungen auf, um mittels Schrauben 5 die Wägezelle 1 fest mit der dünnen Platte 4 zu verbinden. Mit Bezugszeichen 3 sind vier Dehnungsmessstreifen bezeichnet, von denen nur zwei sichtbar und schematisch dargestellt sind. Die Fig. 1b zeigt, dass beim Einwirken einer Kraft F die dünne Platte 4 deformiert wird. Daher ist es erforderlich, die Platte 4 an der Befestigungsstelle mit einer Verstärkungsplatte 4a zu verstärken, wie in Fig. 1c gezeigt. Dadurch wird die Krafteinwirkung über eine größere Fläche verteilt und somit die Flächenpressung an der Befestigungsstelle verringert. So wird ein Deformieren des dünnwandigen Materials verhindert. Je größer die angreifende Kraft ist, umso größer muss die Verstärkungsplatte 4a sein.

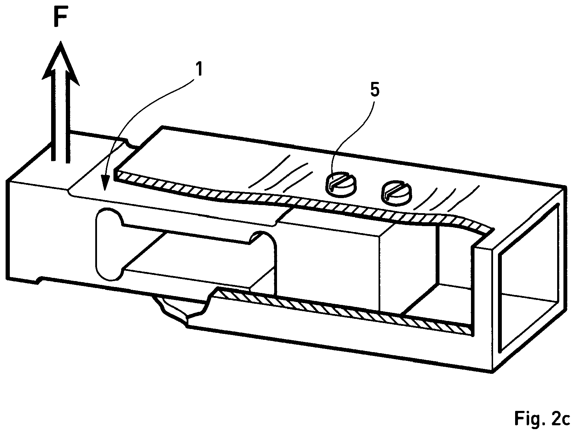

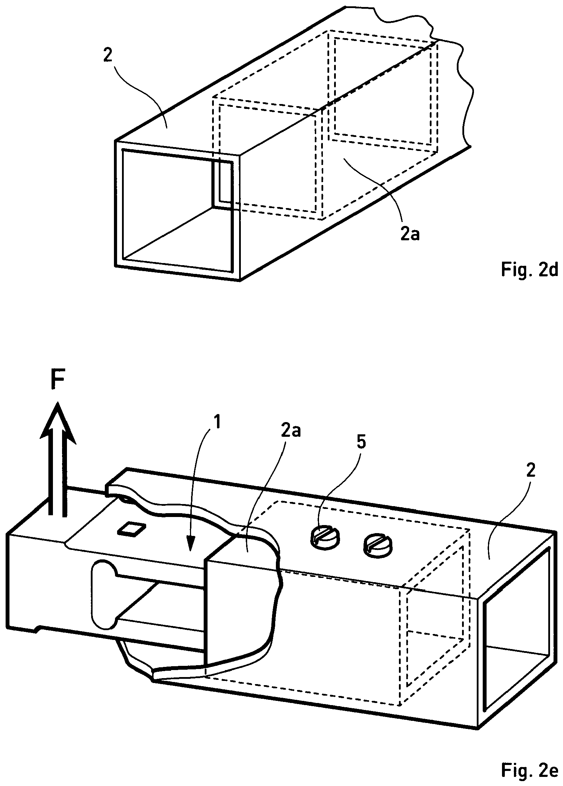

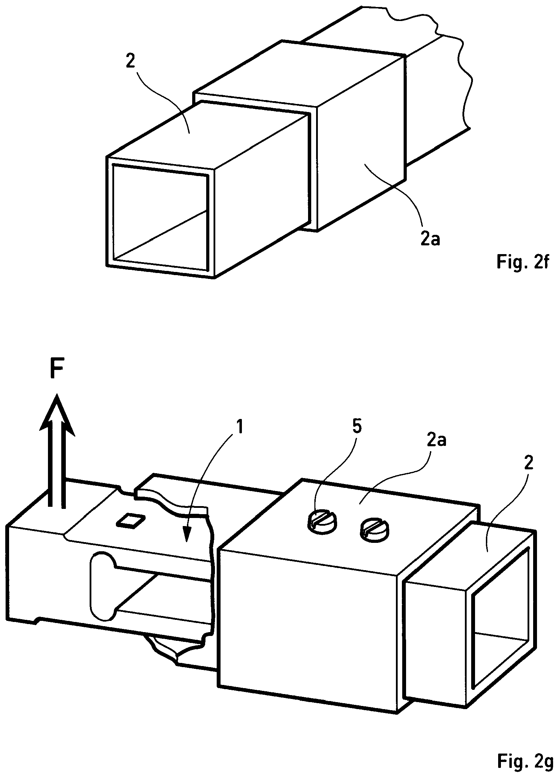

Vergleichbare Bedingungen liegen vor, wenn die Wägezelle in einem dünnwandigen Hohlprofil 2 befestigt werden soll, wie in Fig. 2a und 2b gezeigt. Auch hier besteht bei Einwirkung einer Kraft F die Gefahr der Deformation des dünnwandigen Hohlprofils 2, wie in Fig. 2c gezeigt. Daher ist es ebenfalls erforderlich, die Befestigungsstelle mit einer Verstärkung zur Verringerung der Flächenpressung zu versehen. Die Fig. 2d und 2e zeigen eine innen angeordnete Verstärkungsmanschette 2a, und die Fig. 2f und 2g zeigen eine außen angeordnete Verstärkungsmanschette 2a. Eine innere Verstärkungsmanschette erfordert einen gewissen Mehraufwand bei der Montage, während eine äußere Verstärkungsmanschette ggf.das Design beeinträchtigt und deren vorstehende Kanten das Außenreinigen des Hohlprofils erschweren.

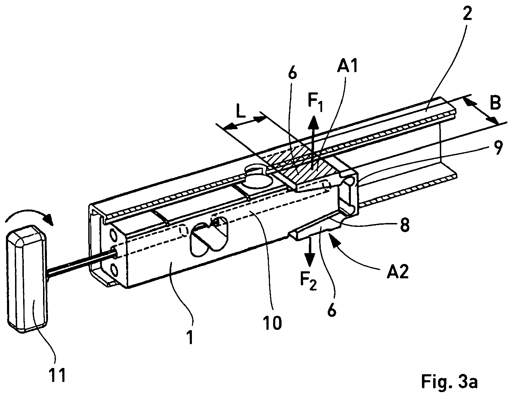

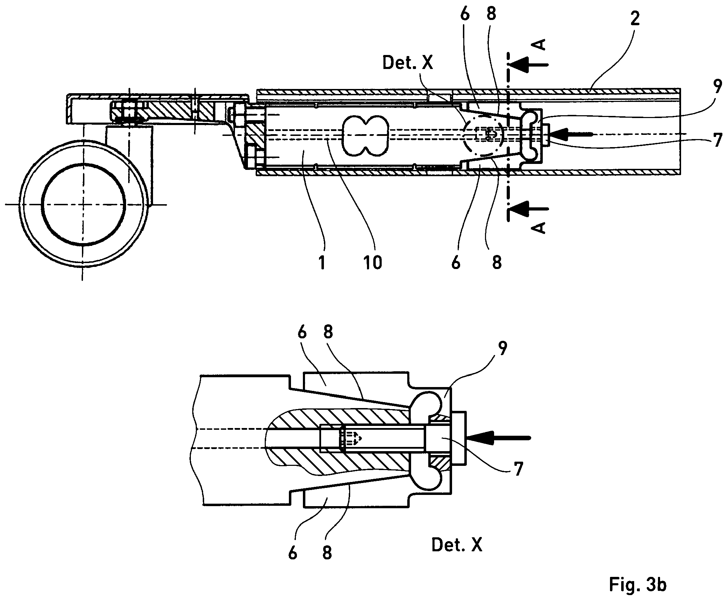

Die Fig. 3a bis 3c zeigen eine erste Ausführungsform der Erfindung. In einem quadratischen dünnwandigen Hohlprofil 2 ist eine Stabwägezelle 1 angeordnet, die an ihrem Befestigungsabschnitt zwei Anlaufschrägen 8 aufweist, auf denen je ein keilförmiges Befestigungselement 6 aufliegt. Beide Befestigungselemente 6 sind über eine Brücke 9 elastisch miteinander verkoppelt. Die Außenkontur der Befestigungselemente 6 ist der Innenkontur des rechteckigen Hohlprofils angepasst, d. h. plan ausgebildet. Mit Bezugszeichen 7 ist eine als Bewegungsvorrichtung dienende Gewindespindel gekennzeichnet, die an einem Ende einen Mitnehmerkopf und am anderen Ende eine Aufnahme für ein Werkzeug 11 aufweist. Die Stabwägezelle ist mit einer Bohrung 10 für das Einführen des Werkzeugs 11 bis zur Gewindespindel 7 und mit einer Gewindebohrung zum Führen der Gewindespindel 7 versehen, wie in Figur 3b und in der Detailvergrößerung Det. X gezeigt.

Wenn die Gewindespindel 7 mit Hilfe des Werkzeugs 11 gedreht wird, drückt der Mitnehmerkopf der Gewindespindel 7 in Pfeilrichtung, d. h. in der Zeichnungsebene der Figur nach links gegen die Brücke 9 und schiebt die beiden Befestigungselemente 6 auf die Anlaufschrägen 8. Dadurch werden die Befestigungselemente 6 gegen die sich gegenüberliegenden Innenwandungen des rechteckigen Hohlprofils gepresst. Aus Fig. 3a ist entnehmbar, dass die Befestigungselemente 6 eine Länge L in Längserstreckung des Hohlprofils 2 und eine näherungsweise der Innenbreite des Hohlprofils 2 entsprechende Breite B aufweisen. Die aus dem Produkt von L x B sich ergebende Klemmfläche A1 beträgt ca. 24% der Hohlprofilinnenwand entlang der Klemmstelle, deren der Länge der Länge des Befestigungselements (6) entspricht. Die gegenüberliegende Klemmfläche A2 beträgt ebenfalls ca. 24 %, d. h. insgesamt beträgt die Klemmfläche A ca. 48%.

Es ist zu betonen, dass die Gewindespindel 7 sowohl in einem Gewindeabschnitt der Stabwägezelle 1 selbst, als auch in einer separaten Mutter, die in der Wägezelle 1 gehalten wird, geführt werden kann, d. h. für die Gewindespindel 7, sowie für die Art ihrer Führung kann ein Fachmann verschiedene Konstruktionen wählen.

Zur Montage wird, wie aus den Fig. 3a und 3b ersichtlich, die Wägezelle zunächst mit allen Befestigungselementen bestückt, dann in das Hohlprofil geschoben und schließlich auf die beschrieben Weise in diesem befestigt. Danach kann an die Stirnseite der Stabwägezelle ein Bauteil zur Lastaufnahme und somit zur Kraftübertragung angeschraubt werden. Im vorliegenden Beispiel ist es eine Radkonstruktion, die jedoch nicht zur Erfindung gehört und daher nicht näher erläutert wird.

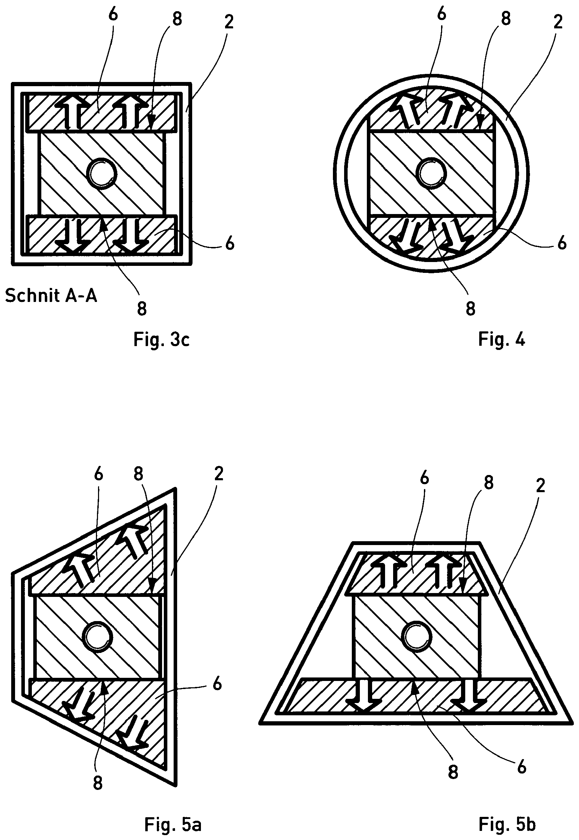

Die Fig. 4 und 5 zeigen jeweils Schnittansichten A-A analog zu dem Schnitt A-A von Fig. 3c.

Die Fig. 4 zeigt eine Ausführungsform der Erfindung für ein kreisrundes Hohlprofil.

Die Fig. 5a und 5b zeigen je eine Ausführungsform der Erfindung für ein trapezförmiges Hohlprofil.

Es ist zu betonen, dass gemäß der Lehre der Erfindung derartige Stabwägezellen auch in anderen als den in den Fig. 3c, 4, 5a und 5b gezeigten Hohlprofilen befestigt werden können.

## Patentansprüche

1. Stabwägezelle (1) mit
- einem Belastungsabschnitt (1a) zur Aufnahme einer Kraft (F),
- einem Befestigungsabschnitt (1 b), und
- wenigstens einem Dehnungssensor (3), der zwischen dem Belastungsabschnitt (1a) und dem Befestigungsabschnitt (1 b) angeordnet ist,
**dadurch gekennzeichnet, dass**
- der Befestigungsabschnitt (1 b) zum Befestigen der Stabwägezelle in einem Hohlprofil (2) ausgelegt ist,
- der Befestigungsabschnitt (1 b) wenigstens ein bewegbares Befestigungselement (6) mit einer mit der Innenwand des Hohlprofils (2) in Presskontakt bringbaren Klemmfläche (A) aufweist,
- zwischen dem Belastungsabschnitt (1a) und dem Befestigungsabschnitt (1b) eine Bewegungsvorrichtung (7) zum Pressen des Befestigungselements (6) an die Innenwand des Hohlprofils (2) angeordnet ist,
- die Klemmfläche (A) an die Geometrie der Innenwand des Hohlprofils (2) angepasst ist, und
- die Größe der Klemmfläche (A) wenigstens 40 % der Fläche beträgt, die sich als Produkt aus dem Innenumfang des Hohlprofils (2) an der Klemmstelle und der Länge (L) des Befestigungselements (6) ergibt.

2. Stabwägezelle nach Anspruch 1, wobei die Klemmfläche (A) wenigstens 60 % der Fläche beträgt, die sich als Produkt aus dem Innenumfang des Hohlprofils (2) an der Klemmstelle und der Länge (L) des Befestigungselements (6) ergibt.

3. Stabwägezelle nach Anspruch 1, wobei der Befestigungsabschnitt (1 b) nachfolgende Merkmale aufweist:
- Anlaufschrägen (8),
- spreizbackenförmige Befestigungselemente (6), die auf den Anlaufschrägen (8) sitzen und über
- eine Brücke (9) miteinander verbunden sind, und
- eine Gewindespindel (7) mit einem Mitnehmerkopf, die innerhalb der Stabwägezelle drehbar so angeordnet ist, dass beim Drehen der Gewindespindel (7) die Befestigungselemente (6) mittels des Mitnehmerkopfes auf die Anlaufschrägen (8) gezogen und gegen die diesen gegenüberliegenden Innenflächen des Hohlprofils (2) gedrückt werden.

4. Stabwägezelle nach Anspruch 3, wobei eine axiale Bohrung (10) in der Stabwägezelle vorgesehen ist, durch welche hindurch vom Belastungsabschnitt (1a) her ein stabförmiges Werkzeug (11) in Eingriff mit der Gewindespindel (7) bringbar ist.

5. Stabwägezelle nach Anspruch 3, wobei die Spreizbacken (6) und die Brücke (9) einstückig ausgebildet sind.

## Claims

1. A beam-type load cell (1), comprising
- a loading section (1 a) for absorbing a force (F),
- a fixing section (1 b), and
- at least one strain sensor (3) arranged between the loading section (1 a) and the fixing section (1 b),
**characterised in that**
- the fixing section (1 b) is configured to fix the beam-type load cell in a hollow profile (2),
- the fixing section (1b) has at least one movable fixing element (6) having a clamping surface (A) which can be brought into pressing contact with the inner wall of the hollow profile (2),
- a moving device (7) for pressing the fixing element (6) onto the inner wall of the hollow profile (2) is arranged between the loading section (1 a) and the fixing section (1 b),
- the clamping surface (A) is adapted to the geometry of the inner wall of the hollow profile (2), and
- the size of the clamping surface (A) is at least 40 % of the area given by the product of the inner periphery of the hollow profile (2) at the clamping point and the length (L) of the fixing element (6).

2. The beam-type load cell according to claim 1, wherein the clamping surface (A) is at least 60 % of the area given by the product of the inner periphery of the hollow profile (2) at the clamping point and the length (L) of the fixing element (6).

3. The beam-type load cell according to claim 1, wherein the fixing section (1b) has the following features:
- run-up slopes (8),
- fixing elements (6) in the form of expanding jaws, which rest on the run-up slopes (8) and which
- are connected to each other via a bridge (9), and
- a threaded spindle (7) with a pusher head, which is rotatably arranged inside the beam-type load cell such that, when the threaded spindle (7) rotates, the fixing elements (6) are drawn by the pusher head onto the run-up slopes (8) and pressed against the inner surfaces of the hollow profile (2) opposite thereto.

4. The beam-type load cell according to claim 3, wherein an axial bore (10) through which a rod-shaped tool (11) can be inserted from the loading section (1a) end and brought into engagement with the threaded spindle (7) is provided in the beam-type load cell.

5. The beam-type load cell according to claim 3, wherein the expanding jaws (6) and the bridge (9) are of integral construction.

## Revendications

1. Cellule de pesage en forme de tige (1) comprenant
- une zone portante (1a) destinée à recevoir une force (F),
- une zone de fixation (1 b), et
- au moins un capteur d'allongement (3), qui est disposé entre la zone portante (1a) et la zone de fixation (1b),
**caractérisée en ce que**
- la zone de fixation (1 b) est conçue pour fixer la cellule de pesage en forme de tige dans un profilé creux (2),
- la zone de fixation (1 b) présente au moins un élément de fixation (6) mobile pourvu d'une surface de blocage (A) pouvant être amenée en contact par pression avec la paroi intérieure du profilé creux (2),
- un dispositif de déplacement (7) destiné à comprimer l'élément de fixation (6) au niveau de la paroi intérieure du profilé creux (2) est disposé entre la zone portante (1a) et la zone de fixation (1b),
- la surface de blocage (A) est adaptée à la géométrie de la paroi intérieure du profilé creux (2), et
- la taille de la surface de blocage (A) représente au moins 40 % de la surface qui résulte du produit de la périphérie intérieure du profilé creux (2) au point de blocage et de la longueur (L) de l'élément de fixation (6).

2. Cellule de pesage en forme de tige (1) selon la revendication 1, dans laquelle la surface de blocage (A) représente au moins 60 % de la surface qui résulte du produit de la périphérie intérieure du profilé creux (2) au point de blocage et de la longueur (L) de l'élément de fixation (6).

3. Cellule de pesage en forme de tige (1) selon la revendication 1, dans laquelle la zone de fixation (1 b) comprend les caractéristiques suivantes:
- des surfaces biseautées (8),
- des éléments de fixation (6) sous forme de mâchoire d'écartement qui reposent sur les surfaces biseautées (8) et
- qui sont reliés entre eux par le biais d'un pont (9), et
- une tige filetée (7) avec une tête d'entraînement qui est disposée de façon rotative à l'intérieur de la cellule de pesage en forme de tige de telle sorte que, lors de la rotation de la tige filetée (7), les éléments de fixation (6) se déplacent sur les surfaces biseautées (8) à l'aide de la tête d'entraînement et se compriment contre les parois intérieures du profilé creux (2) qui leur font face.

4. Cellule de pesage en forme de tige (1) selon la revendication 3, dans laquelle un perçage (10) axial est prévu dans la cellule de pesage en forme de tige à travers lequel, à l'intérieur de la zone portante (1a), un outil (11) en forme de tige est susceptible d'être mis en contact avec la tige filetée (7).

5. Cellule de pesage en forme de tige (1) selon la revendication 3, dans laquelle les mâchoires d'écartement (6) et le pont (9) sont formés d'un seul tenant.
